## Europäisches Patentamt
## European Patent Office
## Office européen des brevets

(19)

(11) Veröffentlichungsnummer: **0 100 871**
**B1**

(12)
# EUROPÄISCHE PATENTSCHRIFT

(45) Veröffentlichungstag der Patentschrift:
25.11.87

(51) Int. Cl.⁴: **H 02 K 15/02**

(21) Anmeldenummer: 83106621.2

(22) Anmeldetag: 06.07.83

(54) Verfahren zur Herstellung eines Blechpaketes, insbesondere für Anker elektrischer Maschinen und Geräte.

| | |
|---|---|
| (30) Priorität: 15.07.82 JP 124052/82 | (73) Patentinhaber: **FUJI ELECTRIC CO. LTD., 1-1, Tanabeshinden, Kawasaki- ku, Kawasaki 210 (JP)** |
| (43) Veröffentlichungstag der Anmeldung: 22.02.84 Patentblatt 84/8 | (72) Erfinder: **Misawa, Miyuki, Meisei- 4, 989, Misatomura, Azumigun Nagano- ken (JP)** Erfinder: **Yanagisawa, Akira, 5-7- C12, Kotobukidai, Matsumoto- shi Nagano- ken (JP)** |
| (45) Bekanntmachung des Hinweises auf die Patenterteilung: 25.11.87 Patentblatt 87/48 | (74) Vertreter: **Mehl, Ernst, Dipl.- Ing., Postfach 22 01 76, D-8000 München 22 (DE)** |
| (84) Benannte Vertragsstaaten: **AT CH DE FR GB IT LI NL** | |
| (56) Entgegenhaltungen: CA-A-903 175 DE-A-2 706 017 GB-A-830 245 US-A-3 202 851 Patent Abstracts of Japan Band 4, Nr. 170, 22 November 1980; & JP - A - 55-117221 | |

LIBER, STOCKHOLM 1987

**Beschreibung**

Die Erfindung bezieht sich auf ein Verfahren zur Herstellung eines Blechpaketes aus geschichteten und miteinander nach dem Stanz-Paketier-Verfahren verbundenen Blechlamellen, insbesondere für Anker elektrischer Maschinen und Geräte gemäß Oberbegriff des Patentanspruchs 1; ein derartiges Verfahren ist aus der GB-PS 830 245 bekannt.

Bei den bekannten Verfahren werden aus den Blechlamellen paarweise angeordnete Zungen mit jeweils einem ersten, in der Ebene der Blechlamellen verlaufenden Endschenkel und lediglich einem zweiten, aus dieser Ebene schräg abgebogenen gerade verlaufenden Endschenkel vorgesehen, die über ihre ausgestanzten Konturen hinaus breitgedrückt werden. Beim Zusammendrücken des Blechpaketes werden die zweiten Endschenkel derart zurückgebogen, daß sich ihre Stirnflächen mit der Stirnfläche der freigestanzten Ausschnittsöffnung der nächstgeschichteten Blechlamelle als auch mit der Stirnfläche der freigestanzten Ausschnittsöffnung der. Blechlamelle verklemmen, mit der die ersten Endschenkel einer jeden Zunge einstückig verbunden ist. Zur automatischen Höhenabtastung der Blechpakete in einer Paketiervorrichtung wird jeweils bei Erreichen der gewünschten Pakethöhe eine geschlossene, nicht mit einer Ausschnittsöffnung versehene Blechlamelle zwischengelegt.

Durch das DE-GM-18 82 073 ist weiterhin ein Verfahren zur Herstellung eines geblechten Schaltmagneten bekannt, bei dem die Blechlamellen einseitig mit vorzugsweise kreisförmigen Eindrückungen derart versehen sind, daß auf ihrer entgegengesetzten Seite Vorsprünge gebildet werden und die Blechlamellen durch Ineinandergreifen ihrer Eindrückungen und Vorsprünge zu einem Blechpaket für den Schaltmagnet zusammensetzbar sind; zur Erzielung einer glatten Außenfläche und gegebenenfalls als Abtastmöglichkeit für eine Paketiervorrichtung ist jeweils das eine der beiden Endbleche eines Blechpaketes nicht mit Eindrückungen und Vorsprünge sondern mit Ausnehmungen versehen ist, in die die Vorsprünge des anliegenden Bleches eingreifen.

Aufgabe der vorliegenden Erfindung ist es, bei einem gattungsgemäßen Verfahren unter Beibehaltung des geringen fertigungs- und montagetechnischen Aufwandes die Verbindungskräfte zwischen den einzelnen gestapelten, nach dem Stanz-Paketier-Verfahren zusammenzuhaltenden Blechlamellen eines Blechpaketes verstärken zu können.

Die Lösung der gestellten Aufgabe gelingt bei einem Verfahren der eingangs genannten Art erfindungsgemäß durch die Lehre des Patentanspruchs 1; vorteilhafte Ausgestaltungen dieses erfindungsgemäßen Verfahrens sind jeweils Gegenstand der Unteransprüche.

Das erfindungsgemäße Verfahren gewährleistet durch seine spezielle Formgebung der Zungen eine wesentlich wirksamere Verbindung der nach dem Stanz-Paketier-Verfahren unter axialem Druck zu einem Blechpaket gegenseitig zu verbindenden Blechlamellen, da beim axialen Enddrücken des Paketes die freien Stirnflächen der aus der Ebene ihrer einstückig verbundenen Blechlamellen S-förmig weggebogenen Zungenenden voll gegen die entsprechenden Stirnflächen der Ausschnittsöffnungen der nächstfolgenden Blechlamelle mit großer, quer zur Bohrungsachse des Blechpaketes gerichteter Anpreßkraft andrückbar sind.

U.a. zur Erzielung einer möglichst symmetrischen Verteilung der die Blechlamellen zusammenhaltenden Verklemmkräfte sind jeweils Zungen-Paare mit zwei spiegelbildlich in Reihe hintereinanderliegenden S-förmigen Zungen eingestanzt und eingedrückt bzw. abgebogen, deren ersten Endschenkel in der Ebene ihrer einstückig verbundenen Blechlamelle voreinanderliegen. Zweckmäßigerweise sind die freien Enden der Zungen derart geformt, daß ihre zweiten Endschenkel vor dem axialen Zusammendrücken der zu einem Blechpaket gestapelten Blechlamellen jeweils in Abstand zu ihrer einstückig verbundenen Blechlamelle verlaufen; wenn dabei in vorteilhafter Weise ein solcher Abstand vorgesehen wird, daß die zweiten Endschenkel beim Zusammendrücken der zu einem Blechpaket gestapelten Blechlamellen Blechpakete ohne gesonderte Werkzeughilfsmittel jeweils nur höchstens bis zur Unterkante ihrer einstückig verbundenen Blechlamelle zurückgebogen bzw. zurückgedrückt werden, ist gewährleistet, daß beim axialen Zusammendrücken der gestapelten Blechlamellen einerseits nicht die Gefahr einer unerwünschten Spaltbildung zwischen den Blechlamellen entsteht und andererseits nicht besondere Maßnahmen vorgesehen werden müssen, die verhindern, daß die freie Stirnseite der abgebogenen Zunge sich auch in der Stirnseite der Ausschnittsöffnung ihrer eigenen, einstückig verbundenen Blechlamelle verklemmt und u.U. dadurch nicht mit maximal möglicher Kraft gegen die festzuhaltende nächstgeschichtete Blechlamelle angedrückt werden kann.

Zur Erzielung einer einfachen Paketier-Vorrichtung mit einer möglichst automatisch betätigbaren Höhenabtastung ist nach einer Ausgestaltung der Erfindung vorgesehen, daß in einem der beiden Endbleche des Blechpaketes lediglich eine den Außenmaßen der einzusteckenden Zunge(n) der vorhergehenden Blechlamelle entsprechende Ausschnittsöffnung freigestanzt ist. Dadurch ist einerseits ein Festklemmen auch dieses Endbleches mittels der Zunge(n) der vorhergehenden nächstgeschichteten Blechlamelle gewährleistet und andererseits sichergestellt, daß keine ausgebogenen Zungen über die Außenmaße des Blechpaketes hinausragen.

Sollen in vorteilhafter Weise die Blechlamellen aus einem noch nicht elektrisch veredelten Rohblechmaterial ausgestanzt und erst nach dem Ausstanzen zur Verbesserung ihrer elektrischen Eigenschaften z. B. in einem Glühofen einer reduzierenden Gasatmosphäre ausgesetzt werden, so ist es vorteilhaft, wenn nach einer weiteren Ausgestaltung der Erfindung die Lamellen des Blechpaketes zunächst bis auf einen gegenseitigen Mindestabstand S zusammengeschoben und dabei lediglich mittels Reib- und/oder Formschluß zwischen ihren Seitenflächen und den entsprechenden Seitenflächen der zugehörigen Ausschnittsöffnungen der nächstgeschichteten Blechlamellen provisorisch in einem Verband zusammengehalten und erst nach dem Glühen beim anschließenden Enddrücken des Blechpaketes endgültig zusammengedrückt und dabei die Stirnflächen der Zungen gegen die Stirnflächen der Ausschnittsöffnungen der nächstgeschichteten Blechlamelle verklemmt werden.

Die Erfindung wird im folgenden anhand eines in der Zeichnung schematisch dargestellten Ausführungsbeispiels erläutert. Es zeigen:

Fig. 1 eine perspektivische Draufsicht auf einen U-förmigen Eisenkern mit fünf einzelnen Blechlamellen, die an drei Fixierpunkten erfindungsmäßig gegenseitig zusammengehalten werden,

Fig. 2 in vergrößertem Ausschnitt die Draufsicht auf einen einzelnen Fixierpunkt,

Fig. 3 im Schnitt eine erste Blechlamelle im Bereich eines Fixierpunktes,

Fig. 4 im Schnitt eine zweite, als Endplatte vorgesehene Blechlamelle im Bereich eines Fixierpunktes,

Fig. 5 ein provisorisch vorgeschichtetes Blechpaket mit auf einen gegenseitigen Mindestabstand zusammengefügten und zusammengehaltenen Blechlamellen,

Fig. 6 das Blechpaket gemäß Fig. 5 nach dem anschließenden Enddrücken.

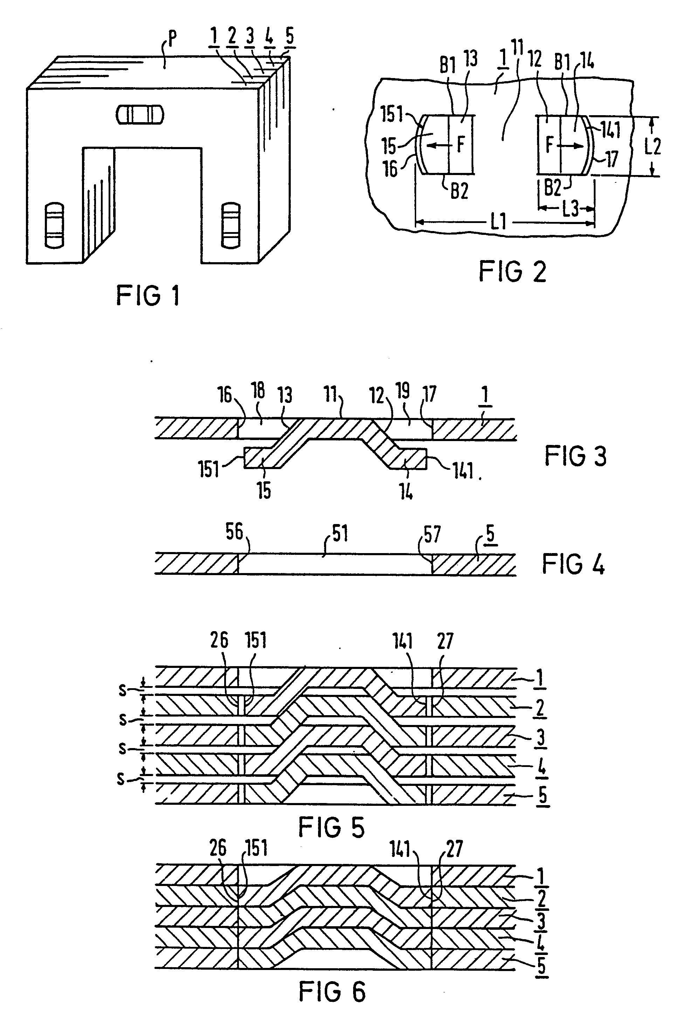

Fig. 1 zeigt ein U-förmiges, z. B. für Transformatorkerne verwendbares Blechpaket P mit fünf einzelnen Blechlamellen 1 bis 5, die durch je einen Fixierpunkt in jedem der drei Schenkel erfindungsgemäß zusammengehalten werden.

Wie insbesondere aus Fig. 5 und Fig. 6 ersichtlich, wird das Blechpaket aus vier Blechlamellen 1 bis 4 mit jeweils zwei zueinander spiegelbildlich angeordneten, S-förmigen Zungen und aus einem Endblech 5 mit lediglich einer den beiden Zungen der vorgeschichteten Blechlamelle 4 entsprechenden Ausschnittsöffnung zusammengesetzt. Zur folgenden näheren Erläuterung ist in Fig. 3 eine einzelne Blechlamelle 1 mit angeformten Zungen und in Fig. 4 eine einzelne, als Endblech zu verwendende Blechlamelle 5 mit lediglich einer den Zungen entsprechenden Ausschnittsöffnung dargestellt.

Jede einstückige Zunge der Blechlamellen 1 bis 4 besteht jeweils aus einem in der Ebene der Blechlamelle liegenden ersten Endschenkel 11, einem freigestanzten und schräg nach unten aus der Ebene weggedrückten bzw. weggebogenen Mittelschenkel 12 bzw. 13 sowie einem anschließenden, weitgehend parallel zu der Ebene der Blechlamelle verlaufenden zweiten Endschenkel 14 bzw. 15. Die als Endblech zu verwendende Blechlamelle 5 weist lediglich eine freigestanzte Ausschnittsöffnung 51 mit beidseitigen Stirnflächen 56, 57 auf, die in den anderen Blechlamellen der jeweiligen Fläche der beiden voreinanderliegenden ersten Endschenkel 11, der Mittelschenkel 12, 13 und der zweiten Endschenkel 14, 15 entspricht. Die freigestanzten und abgebogenen bzw. weggedrückten Teile der Zungen haben eine derartige genau bemessene Form, daß die beiden freien Stirnflächen 141 bzw. 151 der zweiten Endschenkel 14 bzw. 15 - wie in Fig. 2 durch entsprechende Bemaßung angedeutet - die gleiche Weite L2 und den gegenseitigen Abstand L1 aufweisen. Die aus der jeweiligen Blechlamelle ausgestanzten Zungenteile haben jeweils die Länge L2. Den freien Stirnflächen 141 bzw. 151 der zweiten Endschenkel 14, 15 sämtlicher mit freigestanzten weggebogenen Zungen versehenen Blechlamellen 1 bis 4 entsprechen gegenüberliegenden Stirnflächen 16 bzw.17, die beim Freistanzen der Zungen rechts und links an den dabei entstehenden Ausschnittsöffnungen 18, 19 gebildet werden.

Wie aus Fig. 5 ersichtlich, werden nach dem Ausstanzen der Blechlamellen 1 bis 5 diese provisorisch bis zu einem gegenseitigen Mindestabstand S zusammengeschoben; dabei erfolgt der gegenseitige Zusammenhalt der einzelnen Blechlamellen 1 bis 5 durch Reib- und/oder Formschluß zwischen den Seitenflächen B1 und B2 der Zungen und der gegenüberliegenden korrespondierenden Seitenflächen der Ausschnittsöffnungen. In diesem vorpaketierten Zustand wird einerseits verhindert, daß die Zungen der vorletzten Blechlamelle 4 über das axiale Außenmaß der Blechlamelle 5 hinausragen und andererseits gewährleistet, daß bei einem u.U. vorgesehenen Glühvorgang eine reduzierende Gasatmosphäre zwischen die einzelnen Blechlamellen eindringen und auf deren gesamte Oberfläche einwirken kann. Beim anschließenden Enddrücken des Blechpaketes, dessen Endzustand in Fig. 6 dargestellt ist, verschwindet der Mindestabstand S zwischen den Blechlamellen 1 bis 5; gleichzeitig wird der Zusammenhalt zwischen den einzelnen Blechlamellen 1 bis 5 dadurch im wesentlichen Maße verstärkt, daß nunmehr durch teilweises Zurückbiegen, insbesondere der Zwischenschenkel der einzelnen Zungen, zusätzlich die freien Stirnflächen 141, 151... der zweiten Endschenkel 14, 15... jeder Blechlamelle 1 bis 4 voll gegen die entsprechende Stirnfläche 26, 27... der nächstgeschichteten Blechlamelle 2... mit einer entsprechend großen Kraft F (Fig. 2) gepreßt werden. Der Zusammenhalt der einzelnen Blechlamellen des endgedrückten Blechpaketes wird somit sowohl durch den Reib- und/oder Formschluß im Bereich der Seitenflächen der Zungen mit den entsprechenden Seitenflächen der Ausschnittsöffnungen als auch insbesondere durch die Anpreßkraft F der freien Stirnflächen der Zungen gegen die entsprechenden Stirnflächen der Ausschnittsöffnungen gewährleistet.

**Patentansprüche**

1. Verfahren zur Herstellung eines Blechpaketes aus geschichteten und miteinander nach dem Stanz-Paketier-Verfahren verbundenen Blechlamellen, insbesondere für Anker elektrischer Maschinen und Geräte, bei dem aus den Blechlamellen (1-4) ansonsten mit diesen einstückig verbundene Zungen (11, 12, 14, bzw. 11, 13, 15) derart freigestanzt und aus der jeweiligen Blechlamellenebene abgebogen und in die freigestamzte bzw. freigebogene korrespondierende Ausschnittsöffnung (18, 19) der nächstgeschichteten Blechlamelle eingesteckt werden,daß die Zungen durch axiale Druckausübung zumindest teilweise rückbiegbar und dabei in der Ausschnittsöffnung mit der nächstgeschichteten Blechlamelle verklemmbar sind, dadurch gekennzeichnet, daß jede Zunge (11, 12, 14... bzw. 11, 13, 15...) im wesentlichen S-förmig mit jeweils einem in der Ebene ihrer einstückig verbundenen Blechlamelle (1, 2, 3, 4) liegenden ersten Endschenkel (11...), einem anschließenden freigestanzten und schräg aus der Ebene weggedrückten bzw. weggebogenen Mittelschenkel (12... bzw. 13...) sowie mit einem daran anschließenden, weitgehend parallel zu der Ebene der Blechlamelle (1, 2, 3, 4) verlaufenden zweiten Endschenkel (14... bzw. 15...) gebildet wird, der beim endgültigen axialen Zusammendrücken der zu einem Blechpaket (P) gestapelten Blechlamellen (1-5) mit seiner jeweiligen freien Stirnflächen (141... bzw. 151...) voll gegen die gegenüberliegende entsprechende Stirnflächen (27... bzw. 26...) der Ausschnittsöffnung der nächstgeschichteten Blechlamelle verklemmt wird.

2. Verfahren nach Anspruch 1, dadurch gekennzeichnet, daß jeweils Zungen-Paare mit zwei spiegelbildlich in Reihe hintereinander liegenden S-förmigen Zungen (11, 12, 14... bzw. 11, 13, 15...) eingestanzt und eingedrückt bzw. abgebogen werden, deren erste Endschenkel (11, 11...) in der Ebene ihrer einstückig verbundenen Blechlamelle (1, 2, 3, 4) voreinanderliegen.

3. Verfahren nach Anspruch 1 oder 2, gekennzeichnet durch eine derartige Formung der Zungen, daß ihre zweiten Endschenkel (14... bzw. 15...) vor dem axialen Zusammendrücken der zu einem Blechpaket (P) gestapelten Blechlamellen (1-5) jeweils in Abstand zu ihrer einstückig verbundenen Blechlamelle verlaufen (Fig. 5).

4. Verfahren nach Anspruch 3, gekennzeichnet durch einen derartigen abstand, daß die zweiten Endschenkel (14... bzw.15...) beim Zusammendrücken der zu einem Blechpaket (P) gestapelten Blechlamellen (1-5) ohne gesonderte Werkzeughilfsmittel jeweils nur höchstens bis zur Unterkante ihrer einstückig verbundenen Blechlamelle zurückgebogen bzw. zurückgedrückt werden (Fig.6).

5. Verfahren nach einem der Ansprüche 1 bis 4 für ein in einer Paketiervorrichtung mit Hilfe eines planparallelen Endbleches höhenabtastbares Blechpaket, dadurch gekennzeichnet, daß in dem Endblech (5) lediglich eine den Außenmaßen der einzusteckenden Zungen der vorhergehenden Blechlamelle (4) entsprechende Ausschnittsöffnung (51) freigestanzt ist (Fig.4).

6. Verfahren nach einem der Ansprüche 1 bis 5, insbesondere für ein vor dem Zusammendrücken zur endgültigen Blechpaket-Form einem Glühvorgang unterzogenen Blechpaket, dadurch gekennzeichnet, daß die Blechlamellen (1-5) des Blechpaketes (P) zunächst bis auf einen gegenseitigen Mindestabstand (S) zusammengeschoben und dabei lediglich mittels Reib- und/oder Formschluß zwischen ihren Seitenflächen (B1, B2) und den entsprechenden Seitenflächen der zugehörigen Ausschnittsöffnungen der nächstgeschichteten Blechlamelle provisorisch zu einem Verband zusammengefügt und erst nach dem Glühen beim anschließenden Enddrücken des Blechpaketes (P) die Stirnflächen (141... bzw.151...) der Zungen gegen die Stirnflächen (27... bzw. 26...) der Ausschnittsöffnungen verklemmt werden.

**Claims**

1. A method of producing a stack of sheets from laminated plates which are stacked and connected to one another in accordance with the punch-stacking process, particularly but not exclusively for armatures of electrical machines and devices, in which tongues (11, 12, 14...; 11, 13, 15) which normally form an integral part of the laminated plates (1 - 4) are punched out of the laminated plates, bent out of the plane of the respective laminated plate, and inserted into the corresponding cut-out opening (18, 19) produced by punching out and cutting away a tongue in the next laminated plate in the stack, in such manner that the tongues can be at least partially bent back by axial pressure and can thus be wedged in the cut-out opening with the next laminated plate in the stack, characterised in that each tongue (11, 12, 14...; 11, 13, 15...) is basically S-shaped and comprises a first end flank (11...) which lies in the plane of the laminated plate (1, 2, 3, 4) to which it is integrally connected, an adjoining punched out central flank (12...; 13...) which is pressed or bent obliquely out of the plane, and an adjoining second end flank (14...;

15...) which extends largely parallel to the plane of the laminated plate (1, 2, 3, 4), and which, during the final axial compression of the laminated plates (1 - 5) which are stacked to form a stack of sheets (P), is fully wedged by means of its respective free end faces (141...; 151...) against the corresponding, opposite end faces (27...; 26...) of the cut-out opening of the next laminated plate in the stack.

2. A method as claimed in Claim 1, characterised in that pairs of tongues in each case comprising two S-shaped tongues (11, 12, 14...; 11, 13, 15...), arranged in mirror-image fashion in series, are punched out and pressed or bent away, the first end flanks (11, 11...) being arranged in series in the plane of the laminated plate (1, 2, 3, 4) to which they are integrally connected.

3. A method as claimed in Claim 1 or 2, characterised by a shaping of the tongues which is such that prior to the axial compression of the laminated plates (1 - 5) stacked to form a stack of sheets (P), the second end flanks (14...; 15...) of the tongues in each case extend at a spaced interval from the laminated plate to which they are integrally connected (Fig. 5).

4. A method as claimed in Claim 3, characterised by a spacing which is such that, when the laminated plates (1 - 5) are stacked to form a stack of sheets (P), the second end flanks (14...; 15...) of the tongues are bent or pressed backwards, without the use of special auxiliary tools, at most only to the lower edge of the laminated plate to which they are integrally connected (Fig. 6).

5. A method as claimed in one of Claims 1 to 4 for a stack of plates, the height of which can be scanned in a stacking device by means of a plane parallel end plate, characterised in that only a cut-out opening (51), corresponding to the outer dimensions of the tongues of the previous laminated plate (4) to be inserted, is punched out of the end plate (5) (Fig. 4).

6. A method as claimed in one of Claims 1 to 5, in particular for a stack of sheets which is subjected to an annealing treatment prior to compression to form the final stack, characterised in that the laminated plates (1 - 5) of the stack (P) are first compressed to a minimum mutual spacing (S), whereby they are provisionally assembled to form a unit merely by frictional and/or shape interlocking between their side faces (B1, B2) and the corresponding side faces of the associated cut-out openings in the next laminated plate in the stack; and that not until after the annealing treatment, during the subsequent final compression of the stack (P), are the end faces (141...; 151...) of the tongues wedged against the end faces (27...; 26...) of the cut-out openings.

## Revendications

1. Procédé pour la réalisation d'un paquet de tôles à partir de lamelles de tôles empilées et reliées entre elles selon le procédé d'estampage et de mise en paquet, en particulier pour des induits de machines et d'appareils électriques, dans lequel on dégage de telle façon par estampage de ces lamelles de tôles (1-4) des languettes (11, 12, 14... et 11, 13, 15...) qui sont normalement venues d'une pièce avec celles-ci et qui sont insérées dans des ouvertures correspondantes dégagées par estampage ou par pliage et appartenant à la lamelle suivante du paquet de tôles, que les languettes sont susceptibles d'être, au moins partiellement, repliées en sens inverse et sont, ce faisant, susceptibles de se bloquer, dans l'ouverture découpée, avec la lamelle empilée suivante, caractérisé par le fait que chaque languette (11, 12, 14... et 11, 13, 15 ...) est conformée sensiblement suivant un S avec respectivement une première branche (11...) qui se situe dans le plan de sa lamelle de tôle (1, 2, 3, 4) qui lui est reliée d'une seule pièce, une branche médiane (12... et 13...) qui fait suite à la première branche et qui est dégagée par estampage et qui est refoulée ou repliée obliquement par rapport au plan, ainsi qu'avec une seconde branche d'extrémité (14... et 15...) qui fait suite à la branche médiane et qui s'étend très largement parallèlement au plan de la lamelle de tôle (1, 2, 3, 4), laquelle seconde branche d'extrémité se bloque, lors de la compression axiale finale des lamelles (1-5) empilées pour former un paquet de tôles (P), contre les surfaces frontales correspondantes et opposées (27... et 26) de l'ouverture découpée de la lamelle de tôle suivante de la pile.

2. Procédé selon la revendication 1, caractérisé par le fait que chaque paire de languettes est estampée et enfoncée ou repliée avec deux languettes en forme de S (11, 12, 14... et 11, 13, 15...) qui se situent en position inversée l'une derrière l'autre, et dont les premières branches d'extrémité (11, 11...) se situent l'une devant l'autre, dans le plan de sa lamelle de tôle (1, 2, 3, 4) avec laquelle elle est reliée d'une seule pièce.

3. Procédé selon la revendication 1 ou 2, caractérisé par une conformation telle des languettes que leurs secondes branches d'extrémité (14... et 15...) s'étendent, avant la compression axiale des lamelles de tôles empilées (1-5) pour former un paquet de tôles (P), respectivement à une certaine distance de leurs lamelles de tôles avec laquelle elles viennent d'une pièce (figure 5).

4. Procédé selon la revendication 3, caractérisé par une distance qui est telle que les secondes branches d'extrémité (14... et 15...) sont, lors de la compression des lamelles de tôle (1-5) empilées pour former un paquet de tôles (P), repliées en arrière ou refoulées, sans outil auxiliaire particulier, au maximum jusqu'au bord inférieur de leurs lamelles de tôle avec laquelle chaque branche est venue d'une pièce (figure 6).

5. Procédé selon une des revendications 1 à 4 pour un paquet de tôles dont la hauteur est susceptible d'être détectée dans un dispositif de mise en paquet à l'aide d'une tôle d'extrémité plane et parallèle, caractérisé par le fait que dans la tôle d'extrémité (5) on réalise par estampage uniquement une ouverture (51) qui correspond aux dimensions extérieures des languettes à insérer et appartenant à la lamelle de tôle précédente (4) (figure 4).

6. Procédé selon l'une des revendications 1 à 5, en particulier pour un paquet de tôles qui doit être soumis à un recuit, avant la compression pour obtenir la forme définitive du paquet de tôles, caractérisé par le fait que les lamelles de tôles (1-5) du paquet de tôles (P) sont d'abord assemblées jusqu'à un intervalle mutuel minimum (S) et sont de ce fait assemblées uniquement par une liaison par friction et/ou par formes complémentaires entre leurs surfaces latérales (B1, B2) et les surfaces latérales correspondantes des ouvertures associées de la lamelle suivante dans la pile, pour former un assemblage, les surfaces frontales (141... et 151...) des languettes n'etant bloquées contre les surfaces frontales (27... et 26...) des ouvertures découpées, seulement après le recuit et la pression finale du paquet de tôles (P) qui y fait suite.

FIG 1

FIG 2

FIG 3

FIG 4

FIG 5

FIG 6